# EUROPEAN PATENT APPLICATION

(11) **EP 4 783 038 A1**
(43) Date of publication of application: **29.07.2026**
(21) Application number: 24875999.5
(22) Date of filing: 09.05.2024
(51) Int. Cl.: G06F 18/24

(54) **FUNCTION MANAGEMENT METHOD AND RELATED DEVICE**

(30) Priority: 13.10.2023 CN 202311334036; 25.01.2024 CN 202410108713
(71) Applicant: Huawei Cloud Computing Technologies Co., Ltd., Gui'an New District, Guizhou 550025 (CN)
(72) Inventor: MAO, Zhewen, Guiyang, Guizhou 550025 (CN); PAN, Dongxue, Guiyang, Guizhou 550025 (CN); XIA, Dongran, Guiyang, Guizhou 550025 (CN)
(74) Representative: Goddar, Heinz J.
(86) International application number: PCT/CN2024/091831
(87) International publication number: WO 2025/077172

(57) **Abstract**

This application provides a function management method. The method includes: receiving a function call trigger event triggered by a user for an objective function; obtaining functionality classification information of the objective function based on a function identifier of the objective function; determining, based on the functionality classification information of the objective function and a mapping relationship between a function functionality and a container type, a target container type matching the functionality classification information of the objective function; allocating a container of the target container type to the objective function from a container resource pool; and loading a code package of the objective function in the container to perform corresponding system call behavior. The method provides an isolation technology for matching a function with a differentiated container as required, functions are classified from a security dimension, and container functionalities are separated, so that functions of different security types are operated in containers of different types. Therefore, computing and data security of the function is implemented. In addition, security of a serverless platform is ensured to prevent a malicious function from escaping a container and damaging an operation environment of the serverless platform.

## Description

This application claims priority to Chinese Patent Application No. 202311334036.9, filed with the China National Intellectual Property Administration on October 13, 2023 and entitled "FUNCTION PROCESSING METHOD AND RELATED DEVICE", and to Chinese Patent Application No. 202410108713.3, filed with the China National Intellectual Property Administration on January 25, 2024 and entitled "FUNCTION MANAGEMENT METHOD AND RELATED DEVICE", which are incorporated herein by reference in their entireties.

### TECHNICAL FIELD

This application relates to the field of cloud computing technologies, and in particular, to a function management method, a function management platform, a compute device cluster, a computer-readable storage medium, and a computer program product.

### BACKGROUND

Serverless (serverless) is a new application mode of cloud computing. In a serverless mode, applications are highly abstracted. In this mode, users only need to pay attention to functions used to express service logic, and do not need to sense cloud computing resources or application operation and maintenance, greatly reducing application development and operation and maintenance costs.

In addition to reducing operation and maintenance workload, high application abstraction in the serverless mode brings more complex security challenges to a serverless platform. For example, specific function operation is usually executed by the serverless platform by freely allocating a container from a pooled resource, and an operation result is returned after the execution is completed. During execution, it is easy for a malicious function to escape a container and further infiltrate a container of another tenant or infiltrate the serverless platform, severely damaging functionalities of the serverless platform.

Currently, the serverless platform performs security hardening on a container on a management side to prevent container escape on the management side. Security hardening means include but are not limited to restricting an external file system from being mounted (mounted) to a container. However, for a container on a tenant side, such a security hardening manner may affect a service functionality on the tenant side, and therefore, is not applicable.

### SUMMARY

This application provides a function management method. The method provides an isolation technology for matching a function with a differentiated container (for example, a differentiated sandbox) as required, functions are classified from a security dimension, and container functionalities are separated, so that functions of different security types are operated in containers of different container types. Therefore, computing and data security of a function can be implemented. In addition, security of the serverless platform is ensured to prevent a malicious function from escaping a container and damaging an operation environment of the serverless platform.

According to a first aspect, this application provides a function management method. The method may be applied to a function management platform. The function management platform is configured to allocate, to a function, a container corresponding to a function functionality. The function management platform may be a software system. The software system may be an independent software system, or may be integrated into another software system in a form such as a plug-in. The software system may be provided for a user in a form of a software package, or may be provided for a user in a form of a cloud service. The software system may be deployed in a compute device cluster, and the compute device cluster executes program code of the software system to perform the function management method in this application. In some possible implementations, the function management platform may alternatively be a hardware system, for example, a compute device cluster having a function management capability such as function scheduling. When the function management platform runs, the function management method in this application may be performed.

Specifically, the function management platform may receive a function call trigger event triggered by the user for an objective function, where the function call trigger event includes a function identifier of the objective function requested to be called. Then, the function management platform may obtain functionality classification information of the objective function based on the function identifier of the objective function, where the functionality classification information indicates a behavior type of the objective function; next, determine, based on the functionality classification information of the objective function and a mapping relationship between a function functionality and a container type, a target container type matching the functionality classification information of the objective function; allocate a container whose container type is the target container type to the objective function from a container resource pool; and load a code package of the objective function in the container to perform system call behavior of the objective function.

The method provides an isolation technology for matching a function with a differentiated container (for example, a differentiated sandbox) as required, functions are classified from a security dimension, and containers are separated in terms of functionalities, so that code packages of functions of different security types can be loaded to containers of different container types for operation. Therefore, computing and data security of a function can be implemented. In addition, security of a serverless platform is ensured to prevent a malicious function from escaping a container and damaging an operation environment of the serverless platform.

In some possible implementations, the function management platform may further receive the functionality classification information marked on an upload interface or a registration interface by the user for the objective function; or the function management platform may provide a function marking capability. Specifically, the function management platform may perform static analysis and/or dynamic analysis based on the code package of the objective function or an image corresponding to the code package to obtain the functionality classification information of the objective function.

This method provides a plurality of manners to classify functionalities of functions, laying a foundation for matching a function with a differentiated container as required. In addition, this method can meet requirements of different services by providing manual marking or automatic marking based on dynamic and static analysis.

In some possible implementations, the function management platform may analyze, based on the code package of the objective function or the image corresponding to the code package, a capability and/or security policy required by the system call behavior of the objective function. Then, the function management platform may obtain the functionality classification information of the objective function based on the capability and/or security policy required by the system call behavior of the objective function.

In the method, the capability and/or security policy required by the system call behavior of the objective function is analyzed, so that functions can be classified from a security dimension to schedule functions of different security types to containers of different container types for execution.

In some possible implementations, the function management platform may construct containers of different container types based on differentiated capabilities or security policies. In this way, a requirement of matching with a differentiated container as required can be met. By matching a function with a customized differentiated container for running, computing and data security of the function can be ensured, and security of the serverless platform can be ensured to prevent a malicious function from escaping a container and damaging an operation environment of the serverless platform.

In some possible implementations, a container type of containers in the container resource pool includes one or more of a computing container type, a network interaction container type, a mounted file system container type, or a common container type.

The computing container type may include a pure computing container type. A container of this type provides only a pure computing capability, and does not have any input/output (input/output, I/O) capability, including disk read/write and network I/O. All function computing occurs only in a container, and does not involve interaction with the outside. The computing container type provides a high-strength isolation capability for a running environment, ensuring function computing security. The network interaction container type allows network interaction, and restricts other system call behavior, minimizing permissions while a function having network interaction is met. The mounted file system container type is similar to the network interaction container type, file system mounting is allowed, and other system calls are restricted, minimizing permissions and risks. The common container type may be a container without any constraint, and usually uses a default security policy.

In the method, the foregoing plurality of types of containers are provided, so that container differentiation can be implemented, and requirements of different functions can be met.

In some possible implementations, the function management platform may formulate a differentiated security policy as a container classification basis, and then enable a corresponding security policy for each type of container resource by using a general container security policy enabling mechanism, to obtain containers of different container types. The security policy may be a seccomp policy. Differentiated security policies include controlling different permissions to implement differentiated seccomp policies. In some examples, the differentiated seccomp policies may include the following four policies:
Policy 1: Read, write, socket, and mount are removed from allowed system calls to restrict the foregoing access.
Policy 2: Socket is included in allowed system calls, but other system calls are restricted.
Policy 3: Mount is included in allowed system calls, but other system calls are restricted.
Policy 4: A default seccomp policy is used.

In this way, a differentiated container can be customized based on a service requirement, and availability is relatively high.

In some possible implementations, the function management platform may further configure container classification information for containers of different container types, and then construct the mapping relationship between a function functionality and a container type based on functionality classification information of at least one function and container classification information of a container corresponding to the at least one function.

The function management platform constructs the mapping relationship between a function functionality and a container type by using the function functionality classification information and the container classification information, laying a foundation for matching with a differentiated container.

In some possible implementations, the function management platform may further receive a function call trigger event configured by the user for the objective function, and publish the objective function. In this way, a function call can be sensed, and a corresponding function call is executed based on the function call trigger event, meeting a service requirement.

According to a second aspect, this application provides a function management platform. The function management platform is configured to allocate, to a function, a container corresponding to a function functionality, and the function management platform includes:
an interaction module, configured to receive a function call trigger event triggered by a user for an objective function, where the function call trigger event includes a function identifier of the objective function requested to be called;
an obtaining module, configured to obtain functionality classification information of the objective function based on the function identifier of the objective function, where the functionality classification information indicates a behavior type of the objective function;
a matching module, configured to determine, based on the functionality classification information of the objective function and a mapping relationship between a function functionality and a container type, a target container type matching the functionality classification information of the function;
a scheduling module, configured to allocate a container whose container type is the target container type to the objective function from a container resource pool; and
a loading module, configured to load a code package of the objective function in the container to perform system call behavior of the objective function.

In some possible implementations, the function management platform further includes a function functionality classification module, and the function functionality classification module is specifically configured to:
receive the functionality classification information marked on an upload interface or a registration interface by the user for the objective function; or
perform static analysis and/or dynamic analysis based on the code package of the objective function or an image corresponding to the code package to obtain the functionality classification information of the objective function.

In some possible implementations, the obtaining module is specifically configured to:
analyze, based on the code package of the objective function or the image corresponding to the code package, a capability and/or security policy required by the system call behavior of the function; and
obtain the functionality classification information of the objective function based on the capability and/or security policy required by the system call behavior of the objective function.

In some possible implementations, the container management platform further includes:
a construction module, configured to construct containers of different container types based on differentiated capabilities or security policies.

In some possible implementations, a container type of containers in the container resource pool includes one or more of a computing container type, a network interaction container type, a mounted file system container type, or a common container type.

In some possible implementations, the function management platform further includes:
a container configuration module, configured to configure container classification information for the containers of different container types; and
a mapping management module, configured to construct the mapping relationship between a function functionality and a container type based on functionality classification information of at least one function and container classification information of a container corresponding to the at least one function.

In some possible implementations, the function management platform further includes:
a publishing module, configured to: receive the function call trigger event configured by the user, and publish the function.

According to a third aspect, this application provides a compute device cluster. The compute device cluster includes at least one compute device, and the at least one compute device includes at least one processor and at least one memory. The at least one processor and the at least one memory communicate with each other. The at least one processor is configured to execute instructions stored in the at least one memory, so that the compute device or the compute device cluster performs the function management method according to any one of the first aspect or the implementations of the first aspect.

According to a fourth aspect, this application provides a computer-readable storage medium. The computer-readable storage medium stores instructions. The instructions instruct a compute device or a compute device cluster to perform the function management method according to any one of the first aspect or the implementations of the first aspect.

According to a fifth aspect, this application provides a computer program product including instructions. When the computer program product runs on a compute device or a compute device cluster, the compute device or the compute device cluster is enabled to perform the function management method according to any one of the first aspect or the implementations of the first aspect.

Based on the implementations provided in the foregoing aspects, further combination may be performed in this application to provide more implementations.

### BRIEF DESCRIPTION OF DRAWINGS

To describe technical methods in embodiments of this application more clearly, the following briefly describes the accompanying drawings to be used in embodiments.
FIG. 1 is a diagram of a system architecture of a function management platform according to this application;
FIG. 2 is a flowchart of a function management method according to this application;
FIG. 3 is a diagram of an application scenario of a function management method according to this application;
FIG. 4 is a flowchart of a function-based functionality classification label matching container and conventional function scheduling according to this application;
FIG. 5 is a diagram of a structure of a function management platform according to this application;
FIG. 6 is a diagram of a structure of a compute device according to this application;
FIG. 7 is a diagram of a structure of a compute device cluster according to this application;
FIG. 8 is a diagram of a structure of another compute device cluster according to this application; and
FIG. 9 is a diagram of a structure of still another compute device cluster according to this application.

### DESCRIPTION OF EMBODIMENTS

The terms "first" and "second" in embodiments of this application are only used for descriptive purposes, and cannot be understood as indicating or implying relative importance or implicitly indicating quantities of indicated technical features. Therefore, a feature limited by "first" or "second" may explicitly or implicitly include one or more features.

First, some technical terms in embodiments of this application are described.

Cloud computing (cloud computing) refers to on-demand access to computing resources over an internet, including but not limited to application programs, servers (physical servers and virtual servers), data storage, development tools, and network functionalities. These resources are hosted in a remote data center managed by a cloud service provider.

Serverless computing (serverless computing), also briefly referred to as serverless, is an architecture directly providing a computing service. In a serverless architecture, a developer only needs to write and upload code. A cloud platform (such as a serverless platform) automatically prepares a corresponding computing resource, completes operation, and outputs a result, greatly simplifying development and operation and maintenance processes.

From the perspective of layers, a function (function) layer is added to an application layer of a traditional software as a service (software as a service, SaaS) architecture in serverless. A granularity of the function layer is finer, so that a computing power requirement of a user can be met more flexibly. Based on this, the serverless architecture may be considered as a design that uses function as a service (function as a service, FaaS) and backend as a service (backend as a service, BaaS) to resolve a problem. Function as a service is a function running as a service, may be written in any language, is directly hosted on a cloud platform, and is triggered by an event. Backend as a service is integration of backend components provided by a cloud platform. A developer does not need to develop or maintain a backend service, and can obtain capabilities such as data storage, message push, and account management by invoking an application programming interface (application programming interface, API) or a software development tool (software development kit, SDK).

Specific function operation may be executed by the serverless platform by freely allocating a container from a pooled resource, and an operation result is returned after the execution is completed. However, during execution, a malicious function is easy to escape a container and further infiltrates a container of another tenant or infiltrates the serverless platform, severely damaging functionalities of the serverless platform. Especially when a kernel of an operating system (operating system, OS) has a vulnerability, the vulnerability can be easily exploited for container escape. For example, a kernel vulnerability numbered CVE-2023-1892 disclosed in common vulnerabilities and exposures (Common Vulnerabilities and Exposures, CVE) affects all OS versions. Containers on the serverless platform are mainly affected by this kernel vulnerability. This may cause container escape. Because a tenant-side container on the serverless platform cannot determine a function to be executed in the container, common container security hardening cannot be implemented. In addition, tenants also worry about security of their own function execution, for example, whether data may be stolen by other tenants during execution.

Currently, for a management-side container, the serverless platform may check a container security problem based on a container security hardening specification and perform container security hardening based on a recommended practice solution. Specifically, for a disclosed container vulnerability problem, a secure and reliable system kernel may be adapted, a security patch is kept updated, the latest Docker is used, and a security patch is kept updated. For a DockerDeamon configuration problem, network communication between containers may be restricted. For a DockerContainer configuration problem, privileged running of a container may be restricted. For example, the container is restricted from mounting to an external file system, the container is restricted from binding to an insecure port, and the container is restricted to use a seccomp file. For a Kubernetes problem, authentication and hypertext transfer protocol secure (Hypertext Transfer Protocol Secure, https) are enabled for ETCD, HTTPS access is enabled for an API server, and access restriction and isolation are performed for Kubelet.

In the foregoing security hardening solution, except the patches of the disclosed vulnerabilities, other security hardening is performed for specific applications. Because specific function operation is usually executed by the serverless platform by freely allocating a container from a pooled resource, and an operation result is returned after the execution is completed, the serverless platform cannot perform precise security hardening based on a service, and currently, has not provided a universal platform capability to prevent container escape on the tenant side. If a container security hardening solution similar to that on a management side is used, running environments of different functions may be affected. Consequently, function execution fails, and a service functionality on the tenant side is affected.

In view of this, this application provides a function management method. The method may be applied to a function management platform. The function management platform is configured to allocate, to a function, a container corresponding to a function functionality. The function management platform may be a software system. The software system may be an independent software system, or may be integrated into another software system in a form such as a plug-in. The software system may be provided for a user in a form of a software package, or may be provided for a user in a form of a cloud service (for example, an application or a microservice of a cloud platform). The software system may be deployed in a compute device cluster, and the compute device cluster executes program code of the software system to perform the function management method in this application. In some possible implementations, the function management platform may alternatively be a hardware system, for example, a compute device cluster having a function management capability such as function scheduling. When the function management platform runs, the function management method in this application may be performed.

Specifically, the function management platform may receive a function call trigger event triggered by the user for an objective function, where the function call trigger event includes a function identifier of the objective function requested to be called. Then, the function management platform may obtain functionality classification information of the objective function based on the function identifier of the objective function. Next, the function management platform determines, based on the functionality classification information of the function and a mapping relationship between a function functionality and a container type, a target container type matching the functionality classification information of the objective function; allocates a container whose container type is the target container type to the objective function from a container resource pool; and loads a code package of the objective function in the container to perform system call behavior of the objective function.

The method provides an isolation technology for matching a function with a differentiated container (for example, a differentiated sandbox) as required, functions are classified from a security dimension, and containers are separated in terms of functionalities, so that code packages of functions of different security types can be loaded to containers of different container types for operation. Therefore, computing and data security of a function can be implemented. In addition, security of a serverless platform is ensured to prevent a malicious function from escaping a container and damaging an operation environment of the serverless platform.

To make the technical solutions of this application clearer and easier to understand, the following describes a system architecture of the function management platform with reference to the accompanying drawings.

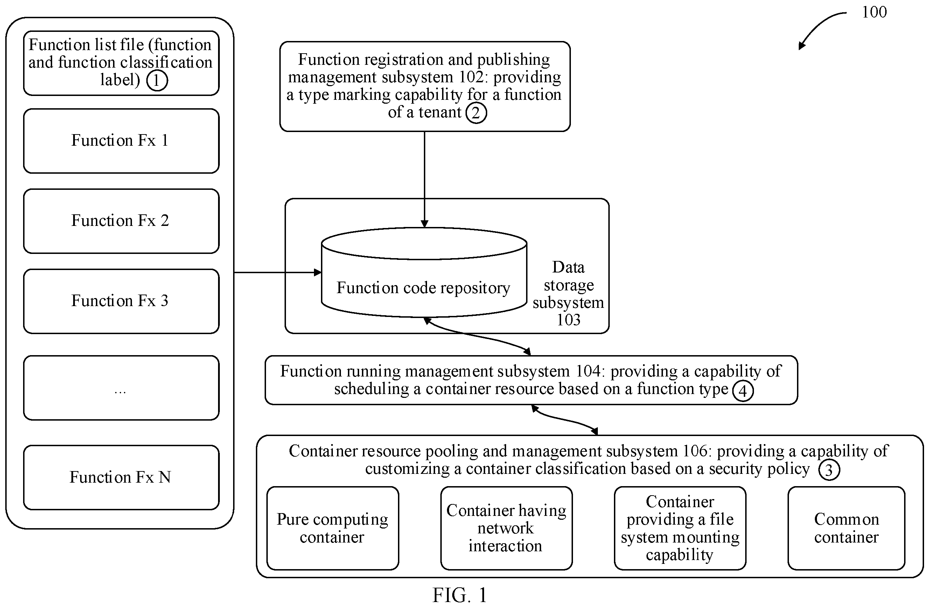

Refer to a diagram of a system architecture of a function management platform shown in FIG. 1, the function management platform 100 is a tool providing a function management capability. The function management capability includes but is not limited to a function registration, publishing, scheduling, and running capability. For example, the function management platform 100 may be a function workflow (function graph, FG) service or a tool.

Specifically, the function management platform 100 includes a function registration and publishing management subsystem 102 and a function running management subsystem 104. The function registration and publishing management subsystem 102 is configured to: receive a code package of a function uploaded by a user, and register and publish the function. The function registration and publishing management subsystem 102 is further configured to obtain functionality classification information of a function. The functionality classification information of the function indicates a behavior type of the function. The functionality classification information of the function may be represented by using a label, for example, a functionality classification label. For example, the functionality classification label of the function may be computing, indicating that the function is a computing-type function (for example, a pure computing-type function). For another example, the functionality classification label of the function may be network interaction, indicating that the function is a function having network interaction.

The function management platform 100 may obtain the functionality classification information of the function in a plurality of manners. The following separately describes different manners by using examples.

In some possible implementations, the function registration and publishing management subsystem 102 is configured to receive the functionality classification information marked on an upload interface or a registration interface by the user for the function. As shown in FIG. 1, the function registration and publishing management subsystem 102 may receive a function compressed package (for example, a function zip package) uploaded by the user. The function zip package may include a function list file (for example, functions Fx 1...Fx N) and the functionality classification information of the function. The function list file includes a code package of the function, and the code package of the function may be stored in a function code repository, for example, a function repo. As shown in FIG. 1, the code package of the function may be stored in the function code repository by using a data storage subsystem 103.

In some other possible implementations, the function registration and publishing management subsystem 102 may provide a type labeling capability for a function of a tenant, and the user does not need to upload functionality classification information of the function. Specifically, the function registration and publishing management subsystem 102 is configured to perform static analysis and/or dynamic analysis on the code package of the function or an image corresponding to the code package to obtain the functionality classification information of the function.

The function running management subsystem 104 is configured to allocate, to the function, a container corresponding to a function functionality to schedule the container of the function. Specifically, the function running management subsystem 104 is configured to: receive a function call trigger event triggered by the user for an objective function, where the function call trigger event includes a function identifier of the objective function requested to be called; then obtain functionality classification information of the objective function based on the function identifier of the objective function, for example, obtain, based on the function identifier of the objective function, the functionality classification information of the objective function from functionality classification information of at least one function stored in the data storage subsystem 103. Next, the function running management subsystem 104 is configured to: determine, based on the functionality classification information of the objective function and a mapping relationship between a function functionality and a container type, a target container type matching the functionality classification information of the objective function; allocate a container whose container type is the target container type to the objective function from a container resource pool; and load a code package of the objective function in the container to perform system call behavior of the objective function.

The function management platform 100 further includes a container resource pooling and management subsystem 106. The container resource pooling and management subsystem 106 provides a capability of performing container classification customization based on a capability (capacity) or a security policy. The function running management subsystem 104 provides a capability of scheduling a container based on functionality classification information of a function.

As shown in FIG. 1, the container resource pooling and management subsystem 106 is configured to construct different types of containers based on a capability and a security policy. The security policy may be a secure computing (secure computing, Seccomp) policy. A container type may include a computing container type, a network interaction container type, a mounted file system container type, or a common container type.

The computing container type may be, for example, a pure computing container type, indicating that a container provides only a pure computing capability, and does not have any input/output (input/output, I/O) capability, including disk read/write and network I/O. To be specific, all function computing occurs only in a container, and does not involve interaction with the outside. The computing container type provides an isolation capability for a high-strength running environment to ensure function computing security, that is, data cannot be stolen, and further ensure that a serverless platform is not damaged by container escape of a malicious function. For a container of this type, the container resource pooling and management subsystem 106 may remove read, write, socket, and mount from corresponding system call behaviors (SCMP_ACT_ALLOW) performed in an allowed process of default seccomp, to obtain the pure computing container type.

For the network interaction container type, a container type having network interaction is allocated to a function that needs to use network interaction, so that risks can be minimized. For a container of this type, the container resource pooling and management subsystem 106 includes socket in the corresponding system call behavior (SCMP_ACT_ALLOW) performed in the allowed process of seccomp. It should be noted that the container resource pooling and management subsystem 106 may restrict other system calls. In this way, the network interaction container type can be obtained. In addition, permissions are minimized while a function having network interaction is met.

The mounted file system container type is a container type supporting file system mounting. A container type supporting file system mounting is allocated to a small quantity of functions requiring file system mounting. In this way, risks can also be minimized. For a container of this type, the container resource pooling and management subsystem 106 includes mount in the corresponding system call behavior (SCMP_ACT_ALLOW) performed in the allowed process of the default seccomp. Similarly to the network interaction container type, the container resource pooling and management subsystem 106 may restrict other system calls to obtain the mounted file system container type.

The common container type may be a container without any constraint. Compared with another container type, the common container type has the weakest security isolation. For a container of this type, a default seccomp security policy is usually used.

It should be noted that the foregoing container types are merely some examples of container types in the container resource pool. In another possible implementation of this embodiment of this application, more container types may be further included. For example, for a function having both network interaction and file system mounting, a container type that has network interaction and file system mounting but restricts other system calls may be constructed.

In the example in FIG. 1, the function registration and publishing management subsystem 102 is an optional subsystem of the function management platform 100, and the function management platform 100 may alternatively not include the function registration and publishing management subsystem 102. For example, when triggering a function call, a user may carry functionality classification information of a function or specify a container type corresponding to a function. Correspondingly, the function running management subsystem 104 may directly obtain the functionality classification information of the function, and further determine the container type corresponding to the functionality classification information of the function; or the function running management subsystem 104 may directly obtain the container type, implementing container scheduling. Similarly, the function management platform 100 may alternatively not include the data storage subsystem 103 and the container resource pooling and management subsystem 106.

Based on the function management platform 100 shown in FIG. 1, this application further provides a function management method. The following describes the function management method in this application with reference to embodiments.

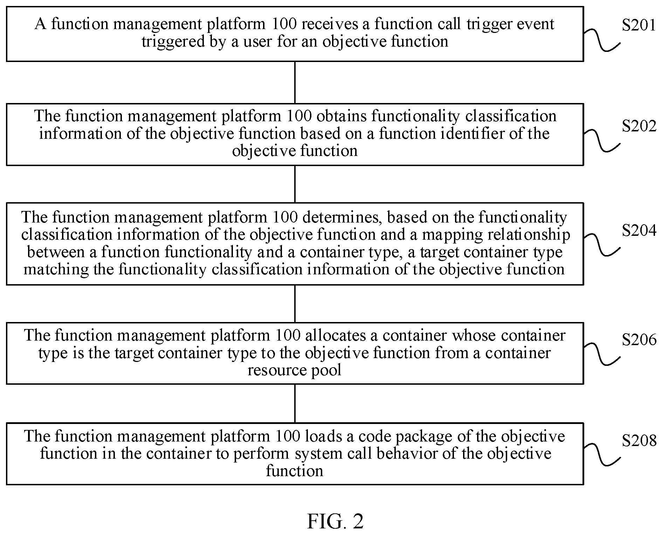

FIG. 2 is a flowchart of a function management method. The method includes the following steps.

S201: A function management platform 100 receives a function call trigger event triggered by a user for an objective function.

The function call trigger event is an event triggering a function call, and may also be briefly referred to as a function call event. The function call trigger event may vary with different functions requested to be called. The function call trigger event may include a function identifier of a function requested to be called. For example, a function call request for the objective function may include a function identifier of the objective function requested to be called. The function identifier may include a function name, a function signature, or another unique identifier that can uniquely identify the function.

The function call trigger event may be an API-based function call trigger event, or a graphical user interface (graphical user interface, GUI) based function call trigger event. For ease of description, the GUI-based function call trigger event is used as an example for description. A GUI may carry at least one control, for example, a control A and a control B. A functionality of the control A may be triggering query, and a functionality of the control B may be triggering encryption. The control A may be bound to a function trigger call event for a query function, and the control B may be bound to a function trigger call event for an encryption function. A user taps the control A, the function management platform 100 may receive the function trigger call event for the query function. The user taps the control B, the function management platform 100 may receive the function trigger call event for the encryption function.

The function call trigger event may be preconfigured, for example, configured in a function registration phase. Specifically, the function management platform 100 may receive a function call trigger event configured by the user, and publish a function. In this way, in a subsequent container scheduling process, the function management platform 100 may detect the function call trigger event for the objective function, and when detecting the function call trigger event for the objective function, trigger a scheduling mechanism of matching a function with a container based on the functionality classification information of the function.

S202: The function management platform 100 obtains functionality classification information of the objective function based on the function identifier of the objective function.

The function may be a unit obtained by splitting an application. A function usually may be written in a programming language, hosted on a cloud platform, and run as a service. A function call may be triggered by using an event, and the event triggering the function call is also referred to as a function call trigger event. The functionality classification information is information classified based on functionalities, for example, may be a functionality classification label, or is referred to as a functionality category label or a functionality label.

For a registered function, the function management platform 100 may store metadata of the function. The metadata of the function may include functionality classification information of the function. The functionality classification information may be stored in a form of a key value (key value, KV) pair. For example, a key may be a function identifier, and a value may be the functionality classification information of the function. Further, the value may further include other metadata of the function. This is not limited in this embodiment. Correspondingly, the function management platform 100 may perform metadata query based on the function identifier of the objective function to obtain the functionality classification information of the objective function.

In some possible implementations, the function management platform 100 may alternatively obtain the functionality classification information of the objective function in real time. A manner in which the function management platform 100 obtains the functionality classification information of the objective function in real time is similar to a manner for obtaining the functionality classification information of the objective function in a registration phase. An example in which the function management platform 100 obtains the functionality classification information of the objective function in the registration phase is used for description.

In the registration phase, the function management platform 100 may obtain the functionality classification information of the objective function in a plurality of implementations. The following separately provides descriptions.

In some possible implementations, the function management platform 100 may receive the functionality classification information marked on an upload interface or a registration interface by the user for the objective function. For example, the function management platform 100 may receive a compressed package of the objective function, and the compressed package may be in a zip format. Based on this, the compressed package of the objective function may be a function zip package. The function zip package includes a code package of the objective function and the functionality classification information of the objective function. The functionality classification information may be marked in advance. For another example, the function management platform 100 may support the user in marking the functionality classification information of the objective function in real time. Specifically, the function management platform 100 may configure a marking control on the upload interface or the registration interface. When the user triggers an upload operation on the upload interface or the user triggers a registration operation on the registration interface, the user may further mark the functionality classification information of the objective function by using the marking control.

In some other possible implementations, the function management platform 100 provides a function functionality marking capability. Specifically, the function management platform 100 may perform static analysis and/or dynamic analysis on the code package of the objective function or an image corresponding to the code package to obtain the functionality classification information of the objective function. The static analysis is also referred to as static program analysis (Static program analysis), static code analysis, or program static analysis (Program Static Analysis), and is a method for performing program analysis without running a program. The static analysis may usually be analyzing code (for example, source code) from dimensions such as lexical, syntactic, and semantics. The dynamic analysis is also referred to as dynamic program analysis or program dynamic analysis, and is a method for tracking program behavior during program running to analyze a program. In this example, the static analysis and the dynamic analysis are mainly to infer behavior of a function from a dimension such as lexical, syntactic, or semantics, or directly track behavior of a function when the function is running to determine a functionality of the objective function and obtain the functionality classification information of the objective function.

Specifically, the function management platform 100 may analyze, based on the code package of the objective function or the image corresponding to the code package, a capability and/or security policy required by system call behavior of the objective function, and then obtain the functionality classification information of the objective function based on the capability and/or security policy required by the system call behavior of the objective function. The capability or security policy required by the system call behavior of the objective function is analyzed based on the code package of the objective function or the image corresponding to the code package. This may be implemented through static analysis or dynamic analysis. The static analysis is used as an example for description. The function management platform 100 may preconfigure a static analysis algorithm, and analyze, by using the static analysis algorithm, the capability and/or security policy required by the system call behavior of the function, to obtain the functionality classification information of the objective function based on a static analysis result.

Considering that the objective function may be separately called by different users or called by a same user for a plurality of times, the function management platform 100 may store the functionality classification information of the objective function. For example, the function management platform 100 may store the functionality classification label of the objective function. In this way, when the objective function needs to be called, the functionality classification label of the objective function may be directly obtained based on the functionality classification label stored in the registration phase, and the user does not need to perform real-time marking or the function management platform 100 does not need to perform real-time analysis.

In this application, the functionality classification information of the function is mainly used to match a function with a proper container for isolation. Therefore, the function management platform 100 may obtain functionality classification information of the function when sensing a function call trigger event (or referred to as a function running trigger event). Specifically, the function management platform 100 may detect the function call trigger event. The function call trigger event includes a function identifier of a function requested to be called, for example, a function name. When detecting the function call trigger event, the function management platform 100 may obtain the functionality classification information of the function in response to the function call trigger event.

S204: The function management platform 100 determines, based on the functionality classification information of the objective function and a mapping relationship between a function functionality and a container type, a target container type matching the functionality classification information of the objective function.

For constructed containers of different container types (differentiated containers), the function management platform 100 may configure container classification information. The function management platform 100 may define the container classification information based on the container types. Similarly to the functionality classification information of the function, the container classification information of the container may also be represented by using a label. Based on this, the container classification information may include a container classification label. During specific implementation, the container classification label may include but is not limited to a computing container type (for example, a pure computing container type), a network interaction container type, a mounted file system container type, or a common container type.

Correspondingly, the mapping relationship between a function functionality and a container type may be represented as a mapping relationship between a functionality classification label of a function and a container classification label. The mapping relationship may be represented by using a mapping rule, a mapping model, or a mapping table. The mapping relationship between a function functionality and a container type is used to match a function with a container (resource) by using a rule, a model, or a mapping table.

Specifically, the function management platform 100 may query the mapping relationship between a function functionality and a container type based on the functionality classification information (for example, the functionality classification label) of the function, for example, query a mapping table between a function functionality and a container type to obtain the target container type matching the functionality classification information of the function. For example, when the functionality classification label of the function is computing, the target container type matching the functionality classification label of the function may be the computing container type. For another example, when the functionality classification label of the function is network interaction, the target container type matching the functionality classification label of the function may be the network interaction container type.

S206: The function management platform 100 allocates a container whose container type is the target container type to the objective function from a container resource pool.

The container resource pool includes containers of different container types. The containers may be containers of different container types constructed by the function management platform 100 based on differentiated capabilities or security policies. In some possible implementations, a container type of containers in the container resource pool includes one or more of a computing container type, a network interaction container type, a mounted file system container type, or a common container type. Each container type may correspond to one or more container classification labels.

Correspondingly, the function management platform 100 may determine, in the container resource pool, a container whose container classification label corresponds to the target container type, and allocate a container whose container type is the target container type to the objective function. The function management platform 100 may randomly select a container whose container classification label corresponds to the target container type, and allocate the container to the objective function; or the function management platform 100 may first determine a container whose container classification label corresponds to the target container type, then select a container through load balancing, and allocate the container to the objective function.

S208: The function management platform 100 loads a code package of the objective function in the container to perform system call behavior of the objective function.

The function management platform 100 may obtain the code package of the objective function from a function code repository, and then load the code package of the objective function to the container to perform the system call behavior of the objective function. The system call behavior may vary with different functionality classification information of the objective function. For example, if the functionality classification information of the objective function is network interaction, the system call behavior may include socket. For another example, if the functionality classification information of the objective function is file system mounting, the system call behavior may include mount. In this way, the objective function can run in the container in which a customization capability or a security policy is used.

It should be noted that when loading the code package of the objective function to the container, the function management platform 100 may load the code package or the image of the code package. An example of loading the image of the code package is used for description. A running environment may be configured for the container based on the image. A process may be started in the container based on the configured running environment to perform the system call behavior of the objective function.

Based on the foregoing content description, in the function management method provided in this application, function functionalities are classified, and containers that match different classifications and that achieve minimum permissions by using capabilities (capacity) and security policies are constructed for the classifications. In a container resource pooling management and function container allocation scheduling process, the objective function is allocated, based on the functionality classification information of the objective function, to the container matching the functionality classification information for running, so that a function execution environment, especially a tenant-side function execution environment, is secure, preventing a function from escaping a container on a tenant side of a serverless platform.

The following describes the function management method in this application in detail with reference to a specific application scenario.

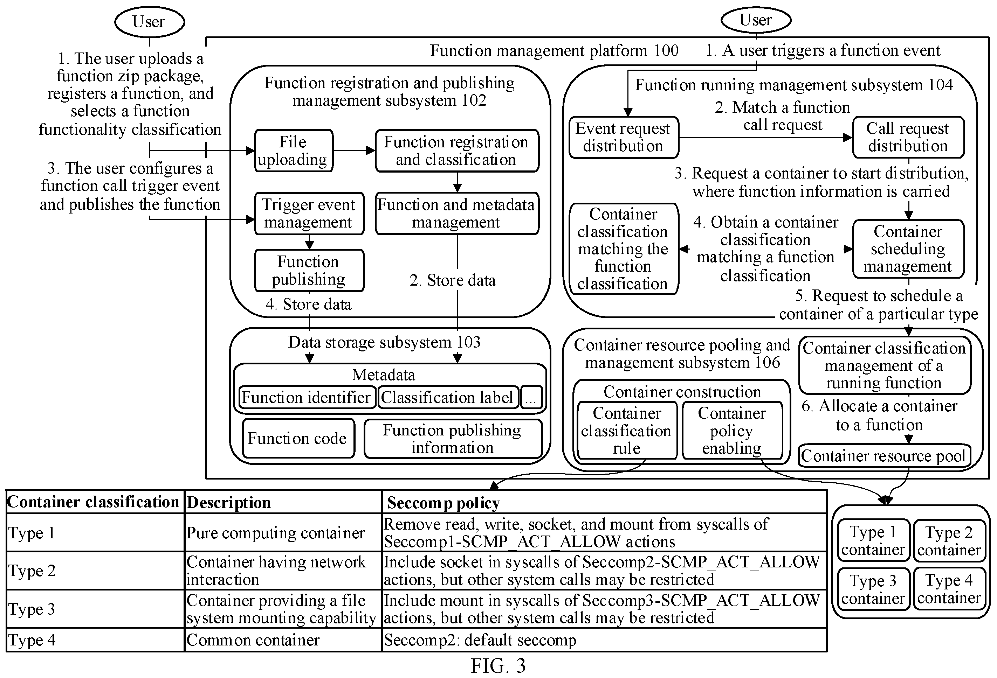

Refer to a schematic flowchart of a function management method shown in FIG. 3. The method may be performed by a function management platform 100. The function management platform 100 includes a function registration and publishing management subsystem 102 and a function running management subsystem 104. Further, the function management platform 100 may further include a data storage subsystem 103 and a container resource pooling and management subsystem 106.

The function registration and publishing management subsystem 102 is configured to: register and mark a function, and store data and metadata of the function by using the data storage subsystem 103. The function running management subsystem 104 is configured to call the function and schedule a container. The container resource pooling and management subsystem 106 is configured to construct a differentiated container to support the function running management subsystem 104.

A function registration and marking solution may include the following steps:
Step 1: A user uploads a function zip package; and the function registration and publishing management subsystem 102 registers a function in response to the file upload operation of the user, and classifies the function based on a functionality classification label selected by the user.

When having a function marking (or function classification) capability, the function registration and publishing management subsystem 102 may further analyze the function zip package uploaded by the user, for example, perform dynamic and static analysis on code of the function in the function zip package to obtain the functionality classification label of the function.

Step 2: The function registration and publishing management subsystem 102 manages and stores the function and metadata of the function.

The metadata of the function may include a function identifier and the functionality classification label (briefly referred to as a classification label in FIG. 3) of the function. The functionality classification label of the function is newly added metadata. Managing the function and the metadata of the function may include persistent storage of the function and the metadata of the function. For example, the function registration and publishing management subsystem 102 may store the code of the function and the metadata of the function.

Step 3: The user configures a function call trigger event, and triggers an operation of publishing the function.

Step 4: The function registration and publishing management subsystem 102 publishes the function and stores function publishing information.

The function publishing information may include at least one of a publishing time, a publisher, and a publishing version number.

In this solution, function registration refers to registering a function is registered, so that the user can call the function. Function publishing refers to publicizing a registered function, for example, publicizing a calling interface, so that the user can call the function through the calling interface.

A function call and container scheduling solution may include the following steps:
Step 1: A user triggers the function call trigger event.

The user uploading the function zip package may be different from the user triggering the function call. The user triggering the function registration and the function call is not limited in this embodiment.

Step 2: The function running management subsystem 104 matches the function call trigger event with a function call request.

The function call trigger event may trigger one or more function calls. Correspondingly, the function call trigger event may match one or more function call requests. Specifically, the function running management subsystem 104 may match the function call trigger event with one or more function call requests by distributing an event request.

Step 3: The function running management subsystem 104 distributes a function call request.

The function call request is used to request the container to start distribution, and the function call request may carry function information, for example, carry a function identifier of the function.

Step 4: The function running management subsystem 104 obtains the functionality classification label of the function through query, and obtains, based on a mapping relationship between a function functionality and a container type, a container type matching the functionality classification label of the function.

During specific implementation, the function running management subsystem 104 may obtain, through container scheduling management, the container type matching the functionality classification label of the function.

Step 5: The function running management subsystem 104 requests to schedule the container whose container type matches the functionality classification label of the function.

Step 6: The function running management subsystem 104 allocates a container of a specified type to the function from a container resource pool.

Step 7: The function running management subsystem 104 finishes downloading code of the function, and triggers the allocated container to finish loading and calling the function.

The differentiated container construction solution is as follows:
1. The container resource pooling and management subsystem 106 formulates a differentiated security policy as a basis for container classification.

The security policy may be a seccomp policy. Differentiated security policies include controlling different permissions to implement differentiated seccomp policies. As shown in FIG. 3, the differentiated seccomp policies may include the following four policies:
Policy 1: Remove read, write, socket, and mount from syscalls of Seccompl-SCMP_ACT_ALLOW to restrict the foregoing access.
Policy 2: Include socket in syscalls of Seccomp2-SCMP_ACT_ALLOW, but restrict other system calls.
Policy 3: Include mount in syscalls of Seccomp3-SCMP_ACT_ALLOW, but restrict other system calls.
Policy 4: A default seccomp policy is used.

2. The container resource pooling and management subsystem 106 enables a corresponding seccomp policy for each type of container resource by using a general container seccomp policy enabling mechanism.

Specifically, the container resource pooling and management subsystem 106 separately enables the differentiated security policies in different containers to obtain containers of different types. FIG. 3 is used as an example for description. The container resource pooling and management subsystem 106 may enable the foregoing differentiated security policies to obtain containers of four container types including a type 1, a type 2, a type 3, and a type 4.

The type 1 is a pure computing container type. A seccomp policy of this type of container may be removing read, write, socket, and mount from syscalls of Seccomp 1-SCMP_ACT_ALLOW to restrict the foregoing access. The type 2 is a network interaction container type. A seccomp policy of this type of container may be including socket in syscalls of Seccomp2-SCMP_ACT_ALLOW, but restricting other system calls. The type 3 is a mounted file system container type. A seccomp policy of this type of container may be including mount in syscalls of Seccomp3-SCMP_ACT_ALLOW, but restricting other system calls. The type 4 is a common container type. A seccomp policy of this type of container may be using a default seccomp policy.

It should be noted that an example in which four differentiated security policies are used to construct containers of four container types is used for description in FIG. 3. In another possible implementation of this embodiment of this application, a container of a new type may be constructed by using another differentiated security policy. Alternatively, the foregoing container types are further subdivided or extended. In addition, this application also supports construction of containers of different container types by using differentiated capacities.

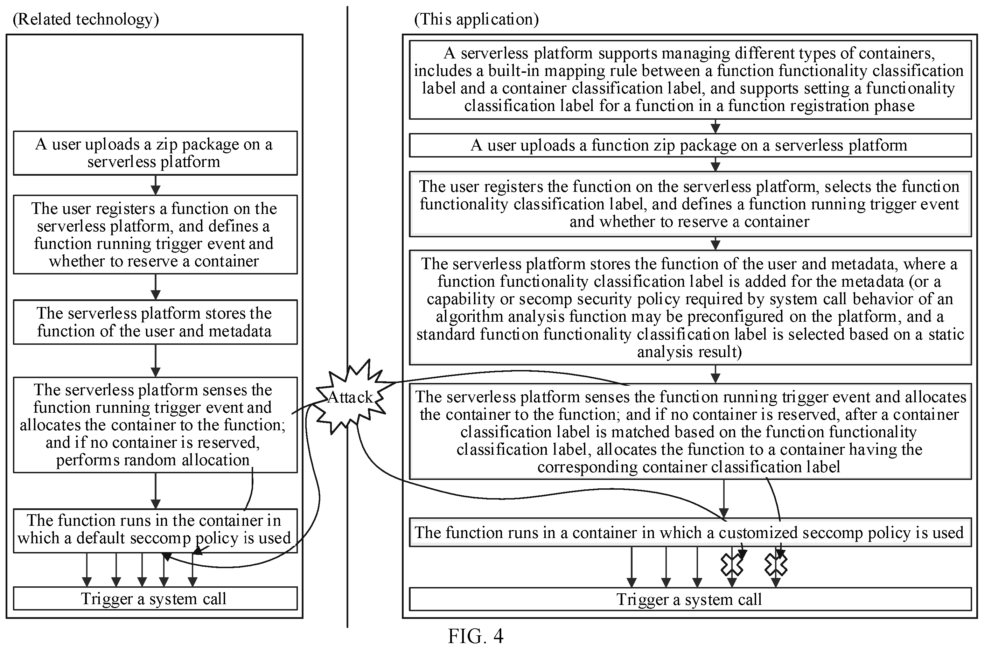

As shown in FIG. 4, compared with a conventional function management method, this method provides an isolation technology for matching a function with a differentiated container as required. Specifically, functions are classified, and containers that match different classifications and that have minimum permissions in terms of capabilities and seccomp security policies are constructed. In a container resource pooling management and function container allocation scheduling process, a function is allocated, based on a function functionality classification label, to a container resource matching the function functionality classification label for running.

For example, in this solution, a pure computing function is allocated to a pure computing container, code of the function is loaded and run in the pure computing container, and the container is restricted to perform system calls such as read, write, socket, and mount. However, in a conventional method, the foregoing permissions of the function are not controlled. In this way, the function management method in this application can prevent the function from being attacked. Similarly, in this solution, a network interaction function is allocated to a network interaction container, and code of the function is loaded and run in the network interaction container. In a running process of the container, network interaction is run, but disk reading and writing and file mounting are restricted. In this way, the container can be prevented from being affected by some vulnerabilities. It can be learned that in the method, a differentiated container is matched with a function as required, so that precise security hardening is performed based on a service, and a universal platform capability for preventing container escape on a tenant side is provided, effectively preventing a function from escaping a container.

Further, this solution provides a function functionality classification method, and specifically, a dynamic and static analysis method by using empirical data or a code package or an image of a function. In the method, a capability and a seccomp security policy that are required by system call behavior of a function may be classified, and a classification rule is preconfigured in the function management platform 100, so that when a user uploads/registers a function, the user is supported in selecting a functionality classification for the function; or the function management platform 100 performs dynamic and static analysis on a code package (for example, source code in the code package) or an image of a function, obtains a capability and a seccomp security policy that are required by system call behavior of the function, and matches a function with a functionality classification based on the capability and the seccomp security policy. After a function functionality classification is determined, a functionality classification label may be added to metadata of the function. The functionality classification label is obtained by performing dynamic and static analysis on code of the function, and a container is matched based on the functionality classification label, so that automatic function deployment can be implemented.

This solution also provides a method for constructing different types of containers by using a capability and a seccomp security policy. In addition, this solution supports defining container classification labels for different constructed containers based on classifications, and a mapping relationship between a function functionality classification label and a container classification label is maintained to match a function with a container resource by using the foregoing mapping relationship.

Based on the foregoing function management method, this application further provides a function management platform 100. The following describes the function management platform 100 from a perspective of functionality modularization.

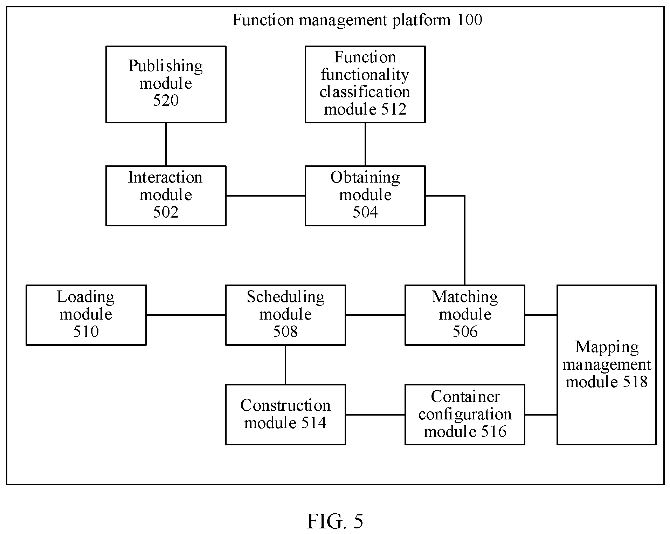

Refer to a diagram of a structure of a function management platform shown in FIG. 5. The function management platform 100 is configured to allocate a container corresponding to a function functionality to a function. The function management platform 100 may include:
an interaction module 502, configured to receive a function call trigger event triggered by a user for an objective function, where the function call trigger event includes a function identifier of the objective function requested to be called;
an obtaining module 504, configured to obtain functionality classification information of the objective function based on the function identifier of the objective function, where the functionality classification information indicates a behavior type of the objective function;
a matching module 506, configured to determine, based on the functionality classification information of the objective function and a mapping relationship between a function functionality and a container type, a target container type matching the functionality classification information of the function;
a scheduling module 508, configured to allocate a container whose container type is the target container type to the objective function from a container resource pool; and
a loading module 510, configured to load a code package of the objective function in the container to perform system call behavior of the objective function.

The interaction module 502, the obtaining module 504, the matching module 506, the scheduling module 508, and the loading module 510 may be functionality modules in the function running management subsystem 104 in FIG. 1 or FIG. 3. The interaction module 502, the obtaining module 504, the matching module 506, the scheduling module 508, and the loading module 510 may be implemented by hardware, or may be implemented by software.

When implemented by software, the interaction module 502, the obtaining module 504, the matching module 506, the scheduling module 508, and the loading module 510 may be application programs, for example, computing engines, running on a compute device. The application program may be provided in a form of a virtualization service. The virtualization service may include a virtual machine (virtual machine, VM) service, a bare metal server (bare metal server, BMS) service, and a container (container) service. The VM service may be a service of virtualizing a virtual machine resource pool on a plurality of physical hosts by using a virtualization technology to provide a VM on demand for a user to use. The BMS service is a service of virtualizing a BMS resource pool on a plurality of physical hosts to provide a BMS on demand for the user to use. The container service is a service of virtualizing a container resource pool on a plurality of physical hosts to provide a container on demand for the user to use. The VM is a simulated virtual computer, namely, a logical computer. The BMS is an elastically scalable high-performance computing service whose computing performance is the same as that of a conventional physical machine, and has a feature of secure physical isolation. The container is a kernel virtualization technology capable of providing lightweight virtualization to isolate user spaces, procedures, and resources. It should be understood that the VM service, the BMS service, and the container service in the virtualization service are merely used as specific examples. During actual application, the virtualization service may alternatively be another lightweight or heavyweight virtualization service. This is not specifically limited herein.

When implemented by hardware, the interaction module 502, the obtaining module 504, the matching module 506, the scheduling module 508, and the loading module 510 may include at least one compute device, for example, a server. Alternatively, the interaction module 502, the obtaining module 504, the matching module 506, the scheduling module 508, and the loading module 510 may be devices implemented by using an application -specific integrated circuit (application-specific integrated circuit, ASIC) or a programmable logic device (programmable logic device, PLD). The PLD may be implemented by a complex programmable logic device (complex programmable logic device, CPLD), a field-programmable gate array (field-programmable gate array, FPGA), generic array logic (generic array logic, GAL), or any combination thereof.

In some possible implementations, the function management platform 100 further includes a function functionality classification module 512. The function functionality classification module 512 is specifically configured to:
receive the functionality classification information marked on an upload interface or a registration interface by the user for the objective function; or
perform static analysis and/or dynamic analysis based on the code package of the objective function or an image corresponding to the code package to obtain the functionality classification information of the objective function.

The function functionality classification module 512 may be a functionality module in a function registration and publishing management subsystem 102. Similarly to the interaction module 502, the obtaining module 504, the matching module 506, the scheduling module 508, and the loading module 510, the function functionality classification module 512 may be implemented by hardware, or may be implemented by software.

When implemented by software, the function functionality classification module 512 may be an application program, for example, a computing engine, running on a compute device. The application program may be provided in a form of a virtualization service. The virtualization service may include a VM service, a BMS service, or a container service. When implemented by hardware, the function functionality classification module 512 may include at least one compute device, for example, a server. Alternatively, the function functionality classification module 512 may be a device implemented by using an ASIC or a PLD, or the like.

It should be noted that the function running management subsystem 104 may support obtaining the functionality classification information of the objective function in real time. Based on this, the function functionality classification module 512 may be a module in the function running management subsystem 104.

In some possible implementations, the obtaining module 504 is specifically configured to:
analyze, based on the code package of the objective function or the image corresponding to the code package, a capability and/or security policy required by the system call behavior of the function; and
obtain the functionality classification information of the objective function based on the capability and/or security policy required by the system call behavior of the objective function.

In some possible implementations, the container management platform 100 further includes:
a construction module 514, configured to construct containers of different container types based on differentiated capabilities or security policies.

The construction module 514 may be a module in a container resource pooling and management subsystem 106. Similarly to the interaction module 502, the obtaining module 504, the matching module 506, the scheduling module 508, the loading module 510, or the function functionality classification module 512, the construction module 514 may be implemented by hardware, or may be implemented by software.

When implemented by software, the construction module 514 may be an application program, for example, a computing engine, running on a compute device. The application program may be provided in a form of a virtualization service. The virtualization service may include a VM service, a BMS service, or a container service. When implemented by hardware, the construction module 514 may include at least one compute device, for example, a server. Alternatively, the construction module 514 may be a device implemented by using an ASIC or a PLD, or the like.

In some possible implementations, a container type of containers in the container resource pool includes one or more of a computing container type, a network interaction container type, a mounted file system container type, or a common container type.

In some possible implementations, the function management platform 100 further includes:
a container configuration module 516, configured to configure container classification information for the containers of different container types; and
a mapping management module 518, configured to construct the mapping relationship between a function functionality and a container type based on functionality classification information of at least one function and container classification information of a container corresponding to the at least one function.

The container configuration module 516 may be a module in the container resource pooling and management subsystem 106. The mapping management module 518 may be a module in the function running management subsystem 104. Similarly to the foregoing functionality module, the container configuration module 516 and the mapping management module 518 may be implemented by software, or may be implemented by hardware.

When implemented by software, the container configuration module 516 and the mapping management module 518 may be application programs, for example, computing engines, running on a compute device. The application program may be provided in a form of a virtualization service. The virtualization service may include a VM service, a BMS service, or a container service. When implemented by hardware, the container configuration module 516 and the mapping management module 518 may include at least one compute device, for example, a server. Alternatively, the container configuration module 516 and the mapping management module 518 may be devices implemented by using an ASIC or a PLD, or the like.

In some possible implementations, the function management platform 100 further includes:
a publishing module 520, configured to: receive the function call trigger event configured by the user, and publish the function.

The publishing module 520 may be a module in the function registration and publishing management subsystem 102. Similarly to the foregoing functionality module, the publishing module 520 may be implemented by software, or may be implemented by hardware.

When implemented by software, the publishing module 520 may be an application program, for example, a computing engine, running on a compute device. The application program may be provided in a form of a virtualization service. The virtualization service may include a VM service, a BMS service, or a container service. When implemented by hardware, the publishing module 520 may include at least one compute device, for example, a server. Alternatively, the publishing module 520 may be a device implemented by using an ASIC or a PLD, or the like.

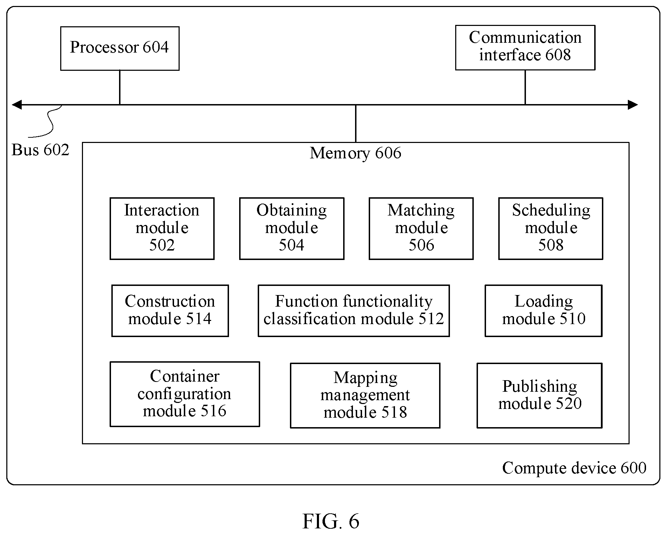

This application further provides a compute device 600. As shown in FIG. 6, the compute device 600 includes a bus 602, a processor 604, a memory 606, and a communication interface 608. The processor 604, the memory 606, and the communication interface 608 communicate with each other through the bus 602. The compute device 600 may be a server or a terminal device. It should be understood that a quantity of processors and a quantity of memories in the compute device 600 are not limited in this application.

The bus 602 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 6. However, it does not mean that there is only one bus or only one type of bus. The bus 602 may include a path for transmitting information between components (for example, the memory 606, the processor 604, and the communication interface 608) of the compute device 600.

The processor 604 may include any one or more of processors such as a central processing unit (central processing unit, CPU), a graphics processing unit (graphics processing unit, GPU), a micro processor (micro processor, MP), or a digital signal processor (digital signal processor, DSP).

The memory 606 may include a volatile memory (volatile memory), for example, a random access memory (random access memory, RAM). The memory 606 may further include a non-volatile memory (non-volatile memory), for example, a read-only memory (read-only memory, ROM), a flash memory, a hard disk drive (hard disk drive, HDD), or a solid-state drive (solid-state drive, SSD). The memory 606 stores executable program code, and the processor 604 executes the executable program code to implement the foregoing function management method. Specifically, the memory 606 stores instructions used by the function management platform 100 to perform the function management method.

The communication interface 608 uses a transceiver module, for example, but not limited to, a network interface card or a transceiver, to implement communication between the compute device 600 and another device or a communication network.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device such as a desktop computer, a notebook computer, or a smartphone.

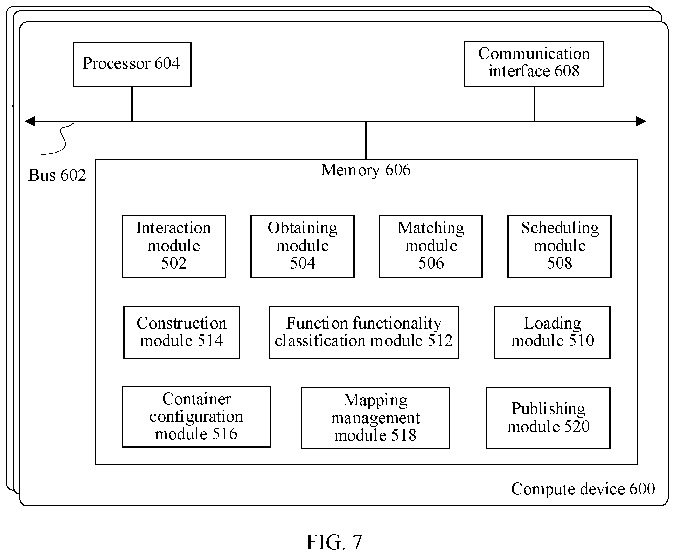

As shown in FIG. 7, the compute device cluster includes at least one compute device 600. Memories 606 in one or more compute devices 600 in the compute device cluster may store same instructions used by the function management platform 100 to perform the function management method.

In some possible implementations, the one or more compute devices 600 in the compute device cluster may alternatively be configured to execute some instructions used by the function management system 100 to perform the function management method. In other words, a combination of the one or more compute devices 600 may jointly execute the instructions used by the function management platform 100 to perform the function management method.

It should be noted that memories 606 in different compute devices 600 in the compute device cluster may store different instructions to perform some functionalities of the function management platform 100.

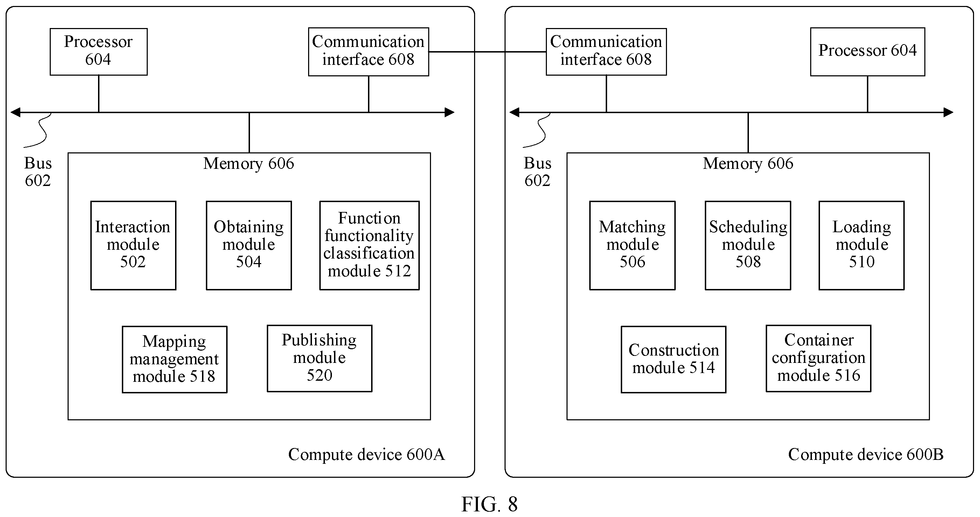

FIG. 8 shows a possible implementation. As shown in FIG. 8, two compute devices 600A and 600B are connected through a communication interface 608. A memory in the compute device 600A stores instructions used to perform functionalities of the interaction module 502 and the obtaining module 504. A memory in the compute device 600B stores instructions used to perform functionalities of the matching module 506, the scheduling module 508, and the loading module 510. In other words, the memories 606 of the compute devices 600A and 600B jointly store instructions used by the function management platform 100 to perform the function management method. Specifically, the memories 606 of the compute devices 600A and 600B jointly store instructions used by the function running management subsystem 104 of the function management platform 100 to perform the function management method. In some possible implementations, the memories 606 of the compute devices 600A and 600B may further store instructions used to perform functionalities of the function functionality classification module 512, the construction module 514, the container configuration module 516, the mapping management module 518, or the publishing module 520.

For a connection manner between compute device clusters shown in FIG. 8, function requirement matching and function scheduling may be performed in consideration of relatively large computing power required by the function management method provided in this application. Therefore, it is considered that functionalities implemented by the matching module 506, the scheduling module 508, and the loading module 510 are assigned to the compute device 600B for execution. For similar consideration, when the function management platform 100 further includes a function functionality classification module 512, a construction module 514, a container configuration module 516, a mapping management module 518, or a publishing module 520, the construction module 514 and the container configuration module 516 may be deployed on the compute device 600B.

It should be understood that, functionalities of the compute device 600A shown in FIG. 8 may alternatively be completed by a plurality of compute devices 600. Similarly, functionalities of the compute device 600B may alternatively be completed by a plurality of compute devices 600.

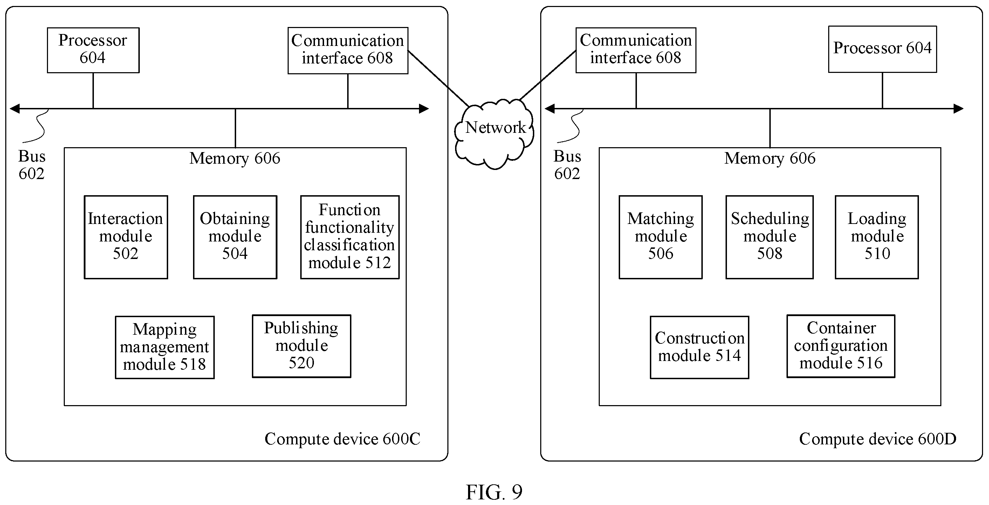

In some possible implementations, the one or more compute devices in the compute device cluster may be connected through a network. The network may be a wide area network, a local area network, or the like. FIG. 9 shows a possible implementation. As shown in FIG. 9, two compute devices 600C and 600D are connected through a network. Specifically, each compute device is connected to the network through a communication interface in the compute device. In such a possible implementation, a memory 606 in the compute device 600C stores instructions used to perform functionalities of the interaction module 502 and the obtaining module 504. In addition, a memory 606 in the compute device 600D stores instructions used to perform functionalities of the matching module 506, the scheduling module 508, and the loading module 510.

For a connection manner between compute device clusters shown in FIG. 9, function requirement matching and function scheduling may be performed in consideration of relatively large computing power required by the function management method provided in this application. Therefore, it is considered that functionalities implemented by the matching module 506, the scheduling module 508, and the loading module 510 are assigned to the compute device 600D for execution. Similarly, functionalities of the function functionality classification module 512, the mapping management module 518, or the publishing module 520 may be assigned to the compute device 600C for execution; and functionalities of the construction module 514 and the container configuration module 516 may be assigned to the compute device 600D for execution.

It should be understood that functionalities of the compute device 600C shown in FIG. 9 may alternatively be completed by a plurality of compute devices 600. Similarly, functionalities of the compute device 600D may alternatively be completed by a plurality of compute devices 600.

An embodiment of this application further provides a computer-readable storage medium. The computer-readable storage medium may be any usable medium that can be stored on a compute device, or a data storage device such as a data center including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the compute device to perform the foregoing function management method applied to the function management system 100.

An embodiment of this application further provides a computer program product including instructions. The computer program product may be a software or program product that includes instructions and that can run on a compute device or can be stored in any usable medium. When the computer program product runs on at least one computer device, the at least one computer device is enabled to perform the foregoing function management method.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A function management method, applied to a function management platform, wherein the function management platform is configured to allocate, to a function, a container corresponding to a function functionality, and the method comprises:
receiving a function call trigger event triggered by a user for an objective function, wherein the function call trigger event comprises a function identifier of the objective function requested to be called;
obtaining functionality classification information of the objective function based on the function identifier of the objective function, wherein the functionality classification information indicates a behavior type of the objective function;
determining, based on the functionality classification information of the objective function and a mapping relationship between a function functionality and a container type, a target container type matching the functionality classification information of the objective function;
allocating a container whose container type is the target container type to the objective function from a container resource pool; and
loading a code package of the objective function in the container to perform system call behavior of the objective function.

2. The method according to claim 1, further comprising:
receiving the functionality classification information marked on an upload interface or a registration interface by the user for the objective function; or
performing static analysis and/or dynamic analysis based on the code package of the objective function or an image corresponding to the code package to obtain the functionality classification information of the objective function.

3. The method according to claim 2, wherein performing static analysis and/or dynamic analysis based on the code package of the objective function or the image corresponding to the code package to obtain the functionality classification information of the objective function comprises:
analyzing, based on the code package of the objective function or the image corresponding to the code package, a capability and/or security policy required by the system call behavior of the objective function; and
obtain the functionality classification information of the objective function based on the capability and/or security policy required by the system call behavior of the objective function.

4. The method according to any one of claims 1 to 3, further comprising:
constructing containers of different container types based on differentiated capabilities or security policies.

5. The method according to any one of claims 1 to 4, wherein a container type of containers in the container resource pool comprises one or more of a computing container type, a network interaction container type, a mounted file system container type, or a common container type.

6. The method according to claim 4 or 5, further comprising:
configuring container classification information for the containers of different container types; and
constructing the mapping relationship between a function functionality and a container type based on functionality classification information of at least one function and container classification information of a container corresponding to the at least one function.

7. The method according to any one of claims 1 to 6, further comprising:
receiving the function call trigger event configured by the user for the objective function, and publishing the objective function.

8. A function management platform, wherein the function management platform is configured to allocate, to a function, a container corresponding to a function functionality, and the function management platform comprises:
an interaction module, configured to receive a function call trigger event triggered by a user for an objective function, wherein the function call trigger event comprises a function identifier of the objective function requested to be called;
an obtaining module, configured to obtain functionality classification information of the objective function based on the function identifier of the objective function, wherein the functionality classification information indicates a behavior type of the objective function;
a matching module, configured to determine, based on the functionality classification information of the objective function and a mapping relationship between a function functionality and a container type, a target container type matching the functionality classification information of the function;
a scheduling module, configured to allocate a container whose container type is the target container type to the objective function from a container resource pool; and
a loading module, configured to load a code package of the objective function in the container to perform system call behavior of the objective function.

9. The function management platform according to claim 8, wherein the function management platform further comprises a function functionality classification module, and the function functionality classification module is specifically configured to:
receive the functionality classification information marked on an upload interface or a registration interface by the user for the objective function; or
perform static analysis and/or dynamic analysis based on the code package of the objective function or an image corresponding to the code package to obtain the functionality classification information of the objective function.

10. The function management platform according to claim 9, wherein the obtaining module is specifically configured to:
analyze, based on the code package of the objective function or the image corresponding to the code package, a capability and/or security policy required by the system call behavior of the function; and
obtain the functionality classification information of the objective function based on the capability and/or security policy required by the system call behavior of the objective function.

11. The function management platform according to any one of claims 8 to 10, wherein the container management platform further comprises:
a construction module, configured to construct containers of different container types based on differentiated capabilities or security policies.

12. The function management platform according to any one of claims 8 to 11, wherein a container type of containers in the container resource pool comprises one or more of a computing container type, a network interaction container type, a mounted file system container type, or a common container type.

13. The function management platform according to claim 11 or 12, further comprising:
a container configuration module, configured to configure container classification information for the containers of different container types; and
a mapping management module, configured to construct the mapping relationship between a function functionality and a container type based on functionality classification information of at least one function and container classification information of a container corresponding to the at least one function.

14. The function management platform according to any one of claims 8 to 13, further comprising:
a publishing module, configured to: receive the function call trigger event configured by the user, and publish the function.

15. A compute device cluster, wherein the compute device cluster comprises at least one compute device, the at least one compute device comprises at least one processor and at least one memory, the at least one memory stores computer-readable instructions, and the at least one processor executes the computer-readable instructions to enable the compute device cluster to perform the function management method according to any one of claims 1 to 7.

16. A computer-readable storage medium, comprising computer-readable instructions, wherein the computer-readable instructions are used to implement the function management method according to any one of claims 1 to 7.

17. A computer program product, comprising computer-readable instructions, wherein the computer-readable instructions are used to implement the function management method according to any one of claims 1 to 7.
